# EUROPEAN PATENT APPLICATION

(11) **EP 4 838 504 A1**
(43) Date of publication of application: **11.11.2026**
(21) Application number: 25207222.8
(22) Date of filing: 07.10.2025
(51) Int. Cl.: G08G 5/21, G08G 5/26, G08G 5/53

(54) **UNMANNED AERIAL VEHICLE, REMOTE MONITORING PLATFORM THEREOF, METHOD FOR UPLOADING INFORMATION THEREOF AND MONITORING METHOD THEREFOR**

(30) Priority: 06.05.2025 TW 114117048
(71) Applicant: Wistron Corporation, New Taipei City 22181 (TW)
(72) Inventor: WU, Pei Lun, 22181 New Taipei City (TW)
(74) Representative: Viering, Jentschura & Partner mbB Patent- und Rechtsanwälte

(57) **Abstract**

An unmanned aerial vehicle (UAV) (10), remote monitoring platform (20) thereof, method for uploading information thereof and monitoring method therefor is related to an information uploading method of the unmanned aerial vehicle (10) which includes generating location information according to reference points (P1-P17) (S542), and uploading the location information to a remote monitoring platform (20) (S544). Each reference point (P1/.../P17) has a serial number and predicted coordinates, and the step of generating the location information according to the reference points (P1-P17) (S542) includes: selecting a selected reference point with predicted coordinates similar or identical to positioning coordinates from the reference points (P1-P17) (S542a); and generating the location information with a serial number of the selected reference point in response to the selected reference point (S542b).

## Description

### BACKGROUND

### Technical Field

The present disclosure relates to an unmanned aerial vehicle monitoring technology, and in particular to an unmanned aerial vehicle, a remote monitoring platform thereof, a method for uploading information thereof and a monitoring method therefor.

### Related Art

Miniature unmanned aerial vehicles (UAVs) can be divided into close-range UAVs, short-range UAVs and medium-range UAVs. Short-range UAVs and medium-range UAVs are often used in logistics transportation and/or security monitoring.

Taking a drone as an example, in a drone system architecture, a remote monitoring platform controls the drone to fly to a destination according to a destination location given by a user. Moreover, during a flight of the drone, the drone constantly transmits real-time global positioning system (GPS) positioning information to a base station through a Narrowband Internet of Things (NB-IOT) module. Then, the base station transmits the received GPS positioning information to the remote monitoring platform through an NB-IOT transport protocol. Finally, the remote monitoring platform stores the GPS positioning information in a database after receiving the GPS positioning information of the drone. Therefore, the user can track a location of the drone in real time by checking data stored by the remote monitoring platform.

### SUMMARY

However, short-range UAVs and medium-range UAVs have high requirements on power saving. In addition, the NB-IOT is paid by a transmitted data volume. If the transmitted data volume exceeds a limit data volume, the NB-IOT will be paid in kilobytes (KB).

In view of this, the present disclosure provides an unmanned aerial vehicle, a remote monitoring platform thereof, a method for uploading information thereof and a monitoring method therefor, which greatly reduces a data length in a transmission packet to effectively reduce a transmitted data volume, thereby reducing data transmission time and power consumption of devices.

In some embodiments, a method for uploading information of an unmanned aerial vehicle includes: generating a piece of location information according to reference points, and uploading the location information to a remote monitoring platform. Each reference point has a serial number and predicted coordinates, and the step of generating the location information according to the reference points includes: selecting a selected reference point with predicted coordinates similar or identical to positioning coordinates from the reference points; and generating location information with a serial number of the selected reference point in response to the selected reference point.

The reference points are points on an expected flight path of the unmanned aerial vehicle and are determined based on a predetermined flight speed of the unmanned aerial vehicle and an uploading frequency.

The step of selecting the selected reference point includes: obtaining the positioning coordinate of a current location of the unmanned aerial vehicle; selecting reference points with a highest data similarity between the predicted coordinates and the positioning coordinates from the reference points as the selected reference point by comparing the positioning coordinates with the predicted coordinates of the reference points; and generating the location information based on the serial number of the selected reference point and a coordinate difference between the predicted coordinates of the selected reference point and the positioning coordinates.

In some embodiments, the positioning coordinates are identical to the predicted coordinates of the selected reference point, and the location information only has a data volume of the serial number of the selected reference point but does not have a data volume of the coordinate difference and the positioning coordinates.

In some embodiments, the positioning coordinates are different from the predicted coordinates of the selected reference point, and the coordinate difference includes a distinguishing character and a plurality of difference bits between the predicted coordinates and the positioning coordinates.

In some embodiments, the highest data similarity means that when the bits of the predicted coordinates in the reference point are sequentially compared with the bits of the positioning coordinates from left to right, a number of remaining bits is the smallest from a first comparison to different bits.

In some embodiments, the above step of selecting the selected reference point includes: calculating a difference data volume between the predicted coordinates of each of the reference points and the positioning coordinates according to the positioning coordinates and the predicted coordinates of the reference points; and selecting a corresponding reference point with a largest difference data volume from the reference points as the selected reference point.

In some embodiments, the above step of selecting the selected reference point is realized by using the following formula: ${MAX}_{n = 1}^{L} \left[{\sum }_{i = 0}^{15} \left({U}_{n} {bit}_{i}-{R}_{n} {bit}_{i}\right) ∧ 0\right]$.

L represents a largest serial number, n represents a serial number of a currently calculated reference point and is one of the serial numbers of the reference points, i represents a decimal bit serial number, Uₙbitᵢ represents an ith bit in the positioning coordinates, and Rₙbitᵢ represents an ith bit in the predicted coordinates of an nth reference point in the reference points.

In some embodiments, the above step of generating the location information includes: calculating a similarity between the predicted coordinates of the selected reference point and the positioning coordinates; and calculating a coordinate difference in response to the similarity indicating that the predicted coordinates are similar to the positioning coordinates, and generating the location information with a serial number of the selected reference point, a distinguishing character and the coordinate difference.

In some embodiments, the above step of calculating the similarity is realized by using the following formula: $S = \left[{\sum }_{i = 0}^{15} \left({U}_{m} {bit}_{i}∧{R}_{l} {bit}_{i}\right)\right] - {P}_{l}$.

S represents the similarity, m represents a sequence number of an uploading time point corresponding to a currently calculated positioning coordinate, l represents the serial number of the selected reference point, i represents a decimal bit serial number, U₂bitᵢ represents an i^{th} bit in the positioning coordinates, Rₗbitᵢ represents an i^{th} bit in the predicted coordinates of the selected reference point, and P represents a decimal number of bits of the serial number of the selected reference point. S being equal to or greater than zero indicates that the predicted coordinates are similar to the positioning coordinates.

In some embodiments, the method for uploading information of an unmanned aerial vehicle further includes: receiving a destination change signal; performing the steps of generating the location information and uploading the location information again in response to the destination change signal; receiving a piece of reference point update information from the remote monitoring platform; and updating the stored reference points with the reference point update information.

In some embodiments, a monitoring method for an unmanned aerial vehicle includes: generating a plurality of reference points according to an expected flight path of an unmanned aerial vehicle; storing the generated reference points; sending the reference points to the unmanned aerial vehicle; receiving a piece of location information uploaded by the unmanned aerial vehicle; obtaining positioning coordinates of the unmanned aerial vehicle by using a serial number in the location information and the stored reference points.

The reference points are points on the expected flight path and are determined based on a predetermined flight speed of the unmanned aerial vehicle and an uploading frequency.

In some embodiments, the above step of obtaining the positioning coordinates includes: obtaining the corresponding predicted coordinates from the stored reference points based on the serial number in the location information as the positioning coordinates.

In some embodiments, the location information further includes a coordinate difference, and the above step of obtaining the positioning coordinates includes: obtaining the corresponding predicted coordinates from the stored reference points based on the serial number in the location information; and generating the positioning coordinates based on the predicted coordinates and the coordinate difference.

In some embodiments, the monitoring method for an unmanned aerial vehicle further includes: selectively generating a new reference point according to current positioning coordinates and previous positioning coordinates, and sending the new reference point to the unmanned aerial vehicle.

In some embodiments, the above step of selectively generating the new reference point includes: obtaining the previous positioning coordinates of the unmanned aerial vehicle; estimating positioning coordinates to be uploaded next time according to the current positioning coordinates and the previous positioning coordinates; obtaining predicted coordinates corresponding to a next uploading time point from the stored reference points; comparing estimated positioning coordinates with obtained predicted coordinates; and taking the estimated positioning coordinates as predicted coordinates of the new reference point in response to the estimated positioning coordinates being different from the obtained predicted coordinates.

In some embodiments, the above step of selectively generating the new reference point is realized by the following formula: ${Loc}_{p} \left(T+1\right) = Loc \left(T\right) + {\sum }_{t = 1}^{T} {M}_{t} \left[Loc\left(t\right)-Loc\left(t-1\right)\right]$.

T represents a current uploading time point, Locₚ(T + 1) represents the estimated positioning coordinates, Loc(T) represents the current positioning coordinates, and [Loc(t) - Loc(t - 1)] represents a location change between two adjacent positioning coordinates, and Mₜ represents a weight.

When the location change shows that the unmanned aerial vehicle flies at a constant speed, the weight is zero, otherwise, the weight is 1.

In some embodiments, the monitoring method for an unmanned aerial vehicle further includes: receiving new end coordinates of a new destination; sending a destination change signal to the unmanned aerial vehicle in response to receiving the new end coordinates; performing the step of receiving the location information and the step of obtaining the positioning coordinates again in response to sending the destination change signal; predicting a plurality of change reference points according to new start coordinates, the new end coordinates, a predetermined flight speed and an uploading frequency; updating the stored reference points with the change reference points; and sending the change reference points to the unmanned aerial vehicle.

Each of the change reference points has a serial number and predicted coordinates, the predicted coordinates of the change reference points are located on a change flight path, two ends of the change flight path are respectively the new start coordinates and the new end coordinates, and the new start coordinates are the positioning coordinates obtained again.

In some embodiments, an unmanned aerial vehicle includes: a flight body, a storage module, a positioning module, a wireless communication module and a control module. The positioning module is located on the flight body and configured to perform positioning to generate positioning coordinates. The storage module stores a plurality of reference points, and each of the reference points has a serial number and predicted coordinates. The control module is connected to the flight body, the storage module, the positioning module and the wireless communication module, and configured to perform the method for uploading information of an unmanned aerial vehicle described above.

In some embodiments, a remote monitoring platform includes: a storage module, a wireless communication module and a processing module. The storage module stores an expected flight path of an unmanned aerial vehicle. The processing module is connected to the storage module and the wireless communication module, and configured to perform: the monitoring method for an unmanned aerial vehicle described above.

### BRIEF DESCRIPTION OF THE DRAWINGS

FIG. 1 is a schematic diagram of a UAV management system according to an embodiment;
FIG. 2 is a functional block diagram of a UAV in FIG. 1;
FIG. 3 is a functional block diagram of a remote monitoring platform in FIG. 1;
FIG. 4 is a flowchart of a monitoring method for a UAV according to an embodiment;
FIG. 5 is a flowchart of a method for uploading information of a UAV according to an embodiment;
FIG. 6 is a flowchart of step S540 according to an embodiment;
FIG. 7 is a flowchart of step S620 according to an embodiment;
FIG. 8 is a flowchart of step S630 according to an embodiment;
FIG. 9 is a flowchart of step S450 according to an embodiment;
FIG. 10 is a flowchart of step S450 according to another embodiment;
FIG. 11 is a schematic diagram of reference points predicted by the remote monitoring platform according to an embodiment;
FIG. 12 is a partial flowchart of the monitoring method for a UAV according to another embodiment;
FIG. 13 is a partial flowchart of the method for uploading information of a UAV according to another embodiment;
FIG. 14 is a schematic diagram of the reference points predicted by the remote monitoring platform according to an embodiment; and
FIG. 15 is a flowchart of step S450 according to still another embodiment.

### DETAILED DESCRIPTION

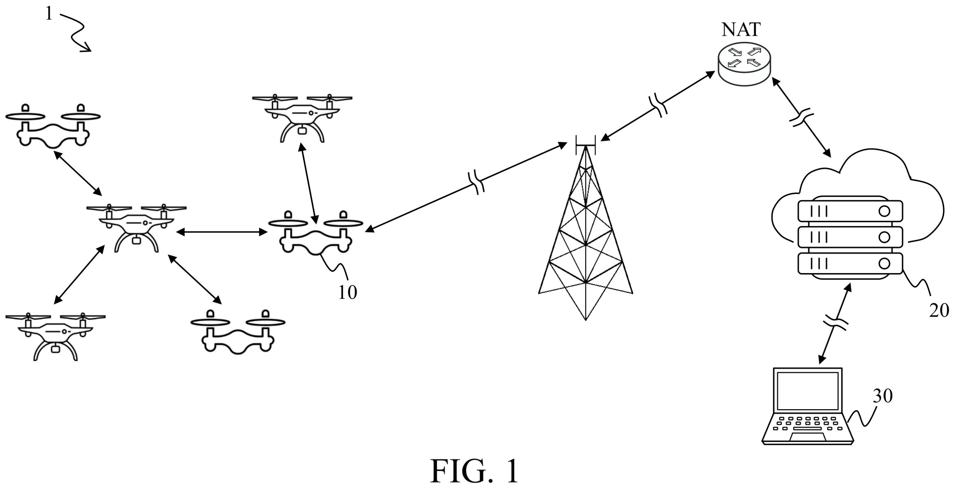

Referring to FIG. 1, an unmanned aerial vehicle (UAV) management system 1 includes one or more UAVs 10 and a remote monitoring platform 20. Each UAV 10 establishes communication with the remote monitoring platform 20 through a wireless communication network to transmit signals and/or information to the remote monitoring platform. The remote monitoring platform 20 will monitor whereabouts of the UAVs 10. During a flight of the UAV 10, the UAV 10 will report its current location to the remote monitoring platform 20. For the sake of clarity, the communication between the UAVs 10 and the remote monitoring platform 20 will be described in detail below in an example where there is one UAV 10.

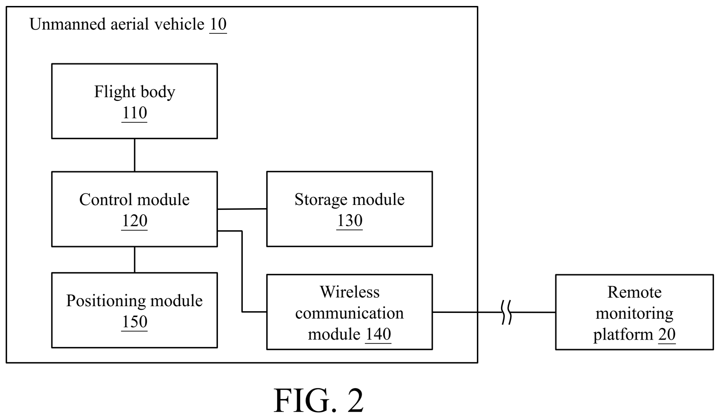

Referring to FIG. 1 and FIG. 2, the UAV 10 includes a flight body 110, a control module 120, a storage module 130, a wireless communication module 140 and a positioning module 150. The control module 120 is coupled to the flight body 110, the storage module 130, the wireless communication module 140 and the positioning module 150. In some embodiments, the flight body 110 may include a flight mechanism and a driving circuit. The driving circuit is coupled to the control module 120 and the flight mechanism, and may drive the flight mechanism to fly under a control of the control module 120. The positioning module 150 is configured to perform positioning to generate positioning coordinates. The wireless communication module 140 is configured to be connected to the remote monitoring platform 20 through the wireless communication network.

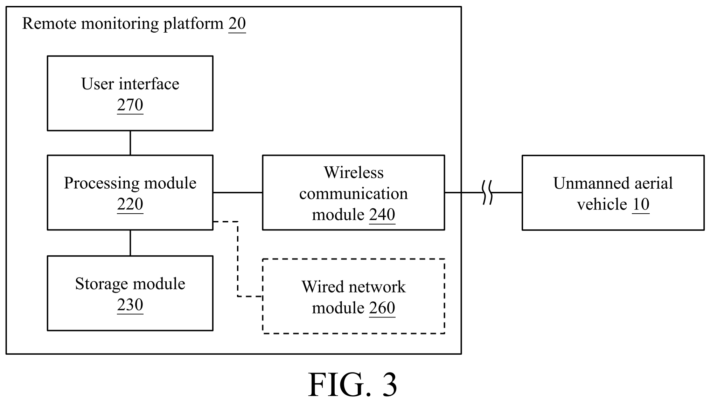

Referring to FIG. 1 to FIG. 3, the remote monitoring platform 20 includes a processing module 220, a storage module 230 and a wireless communication module 240. The processing module 220 is connected to the storage module 230 and the wireless communication module 240. The wireless communication module 240 is configured to be connected to the wireless communication module 140 through the wireless communication network such that the remote monitoring platform 20 transmits signals and/or information with the UAV 10.

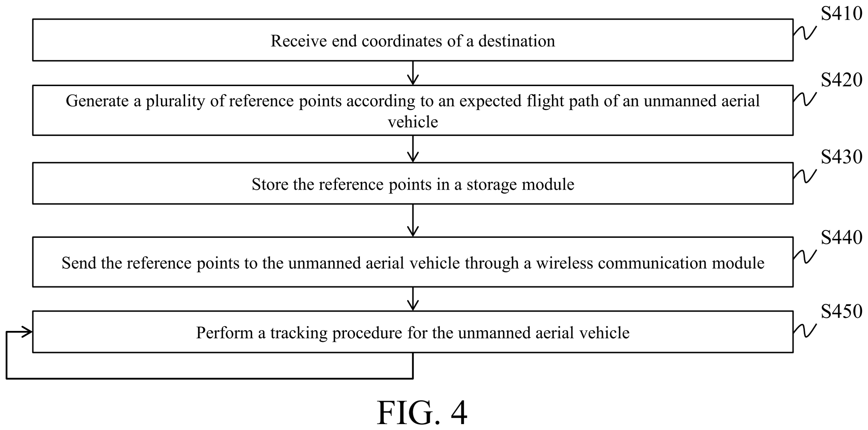

Referring to FIG. 1 to FIG. 4, after the UAV management system 1 is started, a user can obtain a current location of the UAV 10 from the remote monitoring platform 20 through a user interface 270 of the remote monitoring platform 20 or a user device 30 connected to the remote monitoring platform 20 via a network, and input a destination (i.e., provide end coordinates of the destination to the remote monitoring platform 20 through the user interface 270 or the user device 30). Here, the user interface 270 or the user device 30 is configured for the processing module 220 to receive an externally inputted destination indication. In some embodiments, the user interface 270 or the user device 30 may provide fields for the user to input end coordinates, or provide an electronic map for the user to click/tap on the location of the destination so as to generate the end coordinates.

In some embodiments, the user interface 270 is coupled to the processing module 220.

In some embodiments, the user device 30 is connected to the wireless communication module 240 of the remote monitoring platform 20 through the wireless communication network so as to establish a communication link with the remote monitoring platform 20. In some embodiments, the remote monitoring platform 20 may further include a wired network module 260, and the wired network module 260 is coupled to the processing module 220. In this case, the user device 30 may also be the wired network module 260 connected to the remote monitoring platform 20 through a wired network so as to establish the communication link with the remote monitoring platform 20.

After the processing module 220 of the remote monitoring platform 20 receives end coordinates of the destination (step S410), the processing module 220 generates a plurality of reference points according to an expected flight path of the UAV 10 (step S420). Next, the processing module 220 stores the reference points in the storage module 230 (step S430), and sends the reference points to the UAV 10 through the wireless communication module 240 (step S440).

Two ends of the expected flight path are respectively start coordinates and end coordinates. The start coordinates are a place where the UAV 10 takes off, i.e., the current location of the UAV 10 before takeoff. Each reference point includes a serial number of this reference point and predicted coordinates of this reference point.

In some embodiments, a predetermined flight speed and an uploading frequency may be preset by the user through the user interface 270 or the user device 30 and stored in the storage module 230. In other words, the processing module 220 may receive the predetermined flight speed and the uploading frequency that are set for the UAV 10 and inputted by the user through the user interface 270 or the user device 30, and store the received predetermined flight speed and uploading frequency in the storage module 230.

In some embodiments, the start coordinates may be obtained in advance and stored in the storage module 230. In some exemplary examples, after the UAV 10 is started, the control module 120 may perform positioning through the positioning module 150 first to obtain positioning coordinates of the current location and upload location information with the positioning coordinates to the remote monitoring platform 20 through the wireless communication module 140. In this case, the processing module 220 can receive the location information from the UAV 10 through the wireless communication module 240 to obtain the positioning coordinates (i.e., the current location of the UAV 10, hereinafter referred to as the first obtained positioning coordinates) and store the first obtained positioning coordinates in the storage module 230. In other exemplary examples, the start coordinates may also be inputted by the user through the user interface 270 or the user device 30 and stored in the storage module 230. In other words, the processing module 220 may receive the coordinates of the current location (i.e., the start coordinates) of the UAV 10 inputted by the user through the user interface 270 or the user device 30 and store received start coordinates in the storage module 230.

In some embodiments, the predicted coordinates of the reference points are the points on the expected flight path of the UAV 10. In some embodiments of step S420, the processing module 220 will predict the predicted coordinates of the reference points according to the start coordinates, the end coordinates, the predetermined flight speed of the flight body 110 of the UAV 10 and the uploading frequency of the location information of the UAV 10. Specifically, after receiving the end coordinates (step S410), the processing module 220 will read the first obtained positioning coordinates from the storage module 230 and takes them as the start coordinates. Next, the processing module 220 plans the expected flight path based on the start coordinates (takeoff place) and the end coordinates (destination), then predicts L places (i.e., preset coordinates of L reference points) where location messages are expected to be uploaded during this flight (along the expected flight path) of the UAV 10 based on the predetermined flight speed and the uploading frequency, and gives the serial numbers based on the sequence of expected uploading time points of the L reference points. L represents a largest serial number (i.e., the serial number with a largest value) among the serial numbers of the reference points and is a positive integer.

After the sending (step S440), corresponding to the uploading frequency of the location information of the UAV 10, the processing module 220 will periodically perform a tracking procedure for the UAV 10 (step S450) so as to obtain the positioning coordinates of the UAV 10 at each uploading time point.

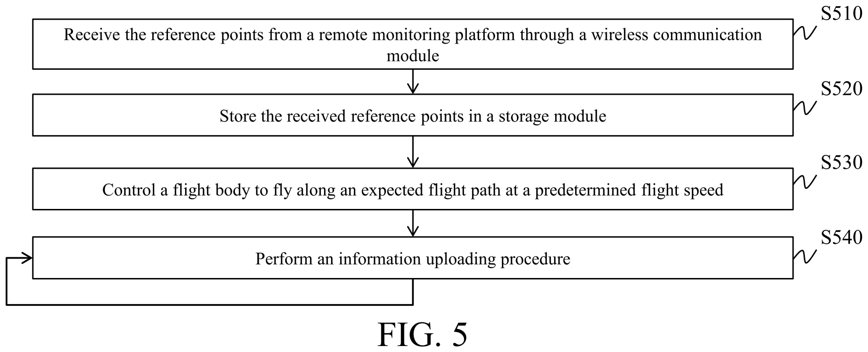

Referring to FIG. 1 to FIG. 5, corresponding to the action that the remote monitoring platform 20 sending the reference points (step S440), the control module 120 of the UAV 10 can receive the reference points sent by the remote monitoring platform 20 through the wireless communication module 140 (step S510) and store the received reference points in the storage module 130 (step S520).

Next, the control module 120 of the UAV 10 controls the flight body 110 to fly along the expected flight path at the predetermined flight speed (step S530).

In some embodiments, the reference points may include the destination. That is, the processing module 220 of the remote monitoring platform 20 takes the end coordinates of the destination as the predicted coordinates of the reference point with the largest serial number. In this case, in step S530, the control module 120 controls the flight body 110 to take off from the start coordinates and fly at the predetermined flight speed toward the predicted coordinates of each reference point one by one in accordance with the serial numbers of the reference points.

In some embodiments, the reference points may not include the destination. That is, when sending the reference points, the remote monitoring platform 20 will also send the information of the destination. In one exemplary example, in step S440, the processing module 220 first packages the reference points and the end coordinates into a packet, and then sends the formed packet to the UAV 10 through the wireless communication module 240. In step S530, according to the reference points and the end coordinates obtained from the received packet, the control module 120 first controls the flight body 110 to take off from the start coordinates and fly at the predetermined flight speed toward the predicted coordinates of each reference point one by one in accordance with the serial numbers of the reference points, and finally controls the flight body to fly at the predetermined flight speed from the predicted coordinates of the reference point with the largest serial number to the end coordinates. In another exemplary example, in step S440, the processing module 220 first packages the reference points and the expected flight path into a packet, and then sends the formed packet to the UAV 10 through the wireless communication module 240. In step S530, the control module 120 controls the flight body 110 to take off and fly along the expected flight path at the predetermined flight speed according to the expected flight path obtained from the received packet.

Besides, during the flight, the processing module 220 will periodically perform an information uploading procedure according to the uploading frequency (step S540) so as to report the positioning coordinates of the current location of the UAV 10 at each uploading time point to the remote monitoring platform 20. In some embodiments, a total number of the uploading time points may be equal to or greater than a total number of the reference points, and the uploading time points need to correspond one-to-one to the reference points.

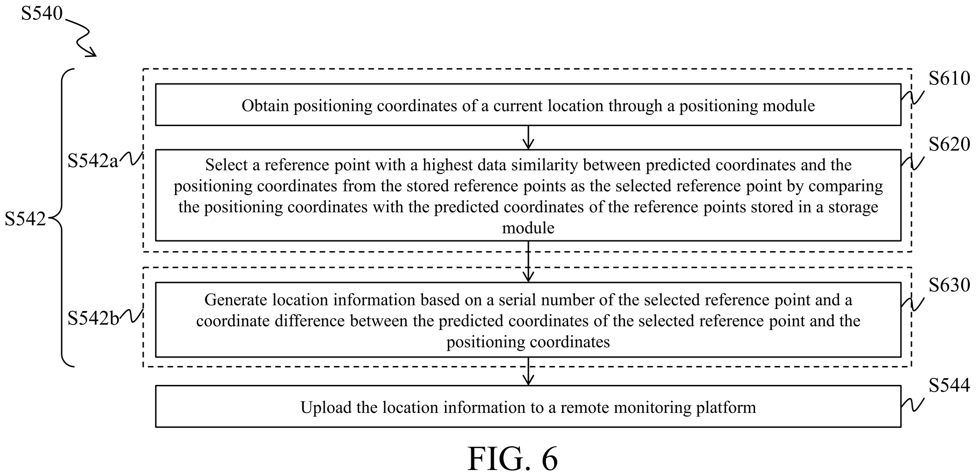

Referring to FIG. 1, FIG. 2, FIG. 5 and FIG. 6, during the process of performing the information uploading procedure (step S540) each time, the processing module 220 will generate a piece of location information according to the reference points (step S542) and uploads generated location information to the remote monitoring platform 20 (step S544). Each reference point has a serial number and predicted coordinates.

In step S542, the processing module 220 selects a selected reference point with the predicted coordinates similar or identical to positioning coordinates from the reference points (step S542a), and generates location information with a serial number of the selected reference point in response to the selected reference point (step S542b).

In some embodiments of step S542a, the processing module 220 obtains the positioning coordinates of a current location through the positioning module 150 (step S610), and selects the reference point with a highest data similarity between the predicted coordinates and the positioning coordinates from the stored reference points as the selected reference point by comparing the positioning coordinates with the predicted coordinates of the reference points stored in the storage module 130 (step S620). Then, in step S542b, the processing module 220 generates the location information based on the serial number of the selected reference point and a coordinate difference between the predicted coordinates of the selected reference point and the positioning coordinates (step S630).

In some embodiments, the highest data similarity means that when the bits of the predicted coordinates in the reference point are sequentially compared with the bits of the positioning coordinates from left to right, a number of remaining bits is the smallest from a first comparison to different bits. In some embodiments, when the positioning coordinates and the predicted coordinates are respectively represented by a plurality of components (e.g., latitude and longitude), the control module 120 first respectively compares and calculates the number of remaining bits of each component, and then calculates the sum of the numbers of remaining bits of these components. The highest data similarity is the smallest sum of the numbers of remaining bits in the reference points.

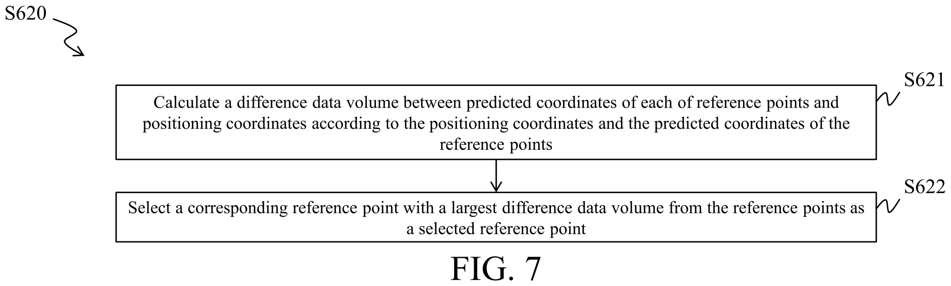

In some embodiments of step S620, referring to FIG. 2, FIG. 5 and FIG. 7, the control module 120 calculates a difference data volume between the predicted coordinates of each of the reference points and the positioning coordinates according to the positioning coordinates and the predicted coordinates of the reference points (step S621), and selects a corresponding reference point with a largest difference data volume from the reference points as the selected reference point (step S622).

In some embodiments, the control module 120 performs step S620 through the calculation according to formula (1) below. ${MAX}_{n = 1}^{L} \left[{\sum }_{i = 0}^{15} \left({U}_{n}{bit}_{i}-{R}_{n}{bit}_{i}\right) ∧ 0\right]$ (1)

L represents the largest serial number among the serial numbers of the reference points stored in the storage module 130. n represents the serial number of the currently calculated reference point and is one of the serial numbers of the reference points stored in the storage module 130. i represents a decimal bit serial number. Uₙbitᵢ represents an i^{th} bit in the positioning coordinates.Rₙbitᵢ represents an i^{th} bit in the predicted coordinates of an n^{th} reference point in the reference points stored in the storage module 130. n and i are positive integers.

Referring to FIG. 1, FIG. 2 and FIG. 5, in some embodiments, when the positioning coordinates are identical to the predicted coordinates of the selected reference point, in step S630, the location information uploaded by the UAV 10 only has a data volume of the serial number of the selected reference point but does not have a data volume of the coordinate difference and the positioning coordinates. In other words, the control module 120 directly packages the serial number of the selected reference point into a packet (i.e., location information) and sends the packet to the remote monitoring platform 20 through the wireless communication module 140.

In other embodiments, when the positioning coordinates are different from the predicted coordinates of the selected reference point and the positioning coordinates are similar to the predicted coordinates of the selected reference point, in step S630, the coordinate difference includes a distinguishing character and a plurality of difference bits between the predicted coordinates and the positioning coordinates. That is, the control module 120 forms data to be uploaded with the serial number of the selected reference point, the distinguishing character and the difference bits between the predicted coordinates and the positioning coordinates, and then sends the packet (i.e., location information) carrying the data to be uploaded to the remote monitoring platform 20 through the wireless communication module 140. For example, assuming that the positioning coordinates are [2234.666,N,12021.123,E] and the selected reference point is [2# 2234.889,N,12021.360,E ], the control module 120 will generate and transmit coordinate information [2#,666,N,123,E] to the remote monitoring platform 20. "2#" is the serial number of the selected reference point, and "2234.889,N,12021.360,E" is the predicted coordinates of the selected reference point.

In still other embodiments, when the positioning coordinates are different from the predicted coordinates of the selected reference point and the positioning coordinates are not similar to the predicted coordinates of the selected reference point, in step S630, the control module 120 directly packages the positioning coordinates (location information) into a packet and sends the packet to the remote monitoring platform 20 through the wireless communication module 140.

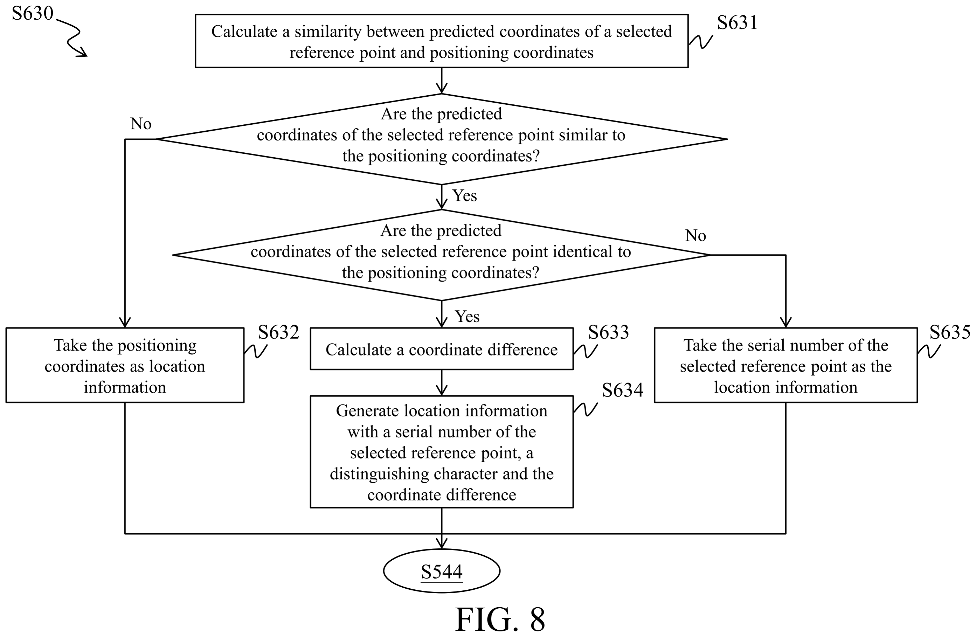

Referring to FIG. 1, FIG. 2, FIG. 5 and FIG. 8, in some embodiments of step S630, after selecting the selected reference point (step S620), the control module 120 will calculate a similarity between the predicted coordinates of the selected reference point and the positioning coordinates (step S631). The control module 120 calculates a coordinate difference in response to the similarity indicating that the predicted coordinates are similar to the positioning coordinates (step S633), and generating the location information with a serial number of the selected reference point, a distinguishing character and the coordinate difference (step S634). Then, the control module 120 sends the generated location information to the remote monitoring platform 20 through the wireless communication module 140 (step S544).

In some exemplary examples, when the similarity indicates that the predicted coordinates are not similar to the positioning coordinates, the control module 120 directly takes the positioning coordinates as the location information (step S632), and then sends the generated location information to the remote monitoring platform 20 through the wireless communication module 140 (step S544).

When the similarity indicates that the predicted coordinates are similar to the positioning coordinates and the predicted coordinates are different from the positioning coordinates, the control module 120 calculates a coordinate difference between the predicted coordinates and the positioning coordinates (step S633), and generates location information with the serial number of the selected reference point, the distinguishing character and the coordinate difference (step S634). Then, the control module 120 sends the generated location information to the remote monitoring platform 20 through the wireless communication module 140 (step S544). For example, in step S633, the control module 120 sequentially compares the bits of each component of the predicted coordinates of the selected reference point with the bits of the corresponding component of the positioning coordinates from left to right, and extracts the bits from the bit different from the corresponding bit of the positioning coordinates to the rightmost bit (i.e., difference bits) from the bits of each component. That is, the coordinate difference is a character string formed by one or more difference bits. Then, in step S634, the control module 120 concatenates the serial number of the selected reference point, the distinguishing character, and the one or more difference bits extracted from each component in step S633 into a character string and takes this character string as the location information.

When the similarity indicates that the predicted coordinates are similar to the positioning coordinates and the predicted coordinates are identical to the positioning coordinates, the control module 120 directly takes the serial number of the selected reference point as the location information (step S635), and then sends the generated location information to the remote monitoring platform 20 through the wireless communication module 140 (step S544).

In some embodiments, the control module 120 performs step S631 through the calculation according to formula (2) below. $S = \left[{\sum }_{i = 0}^{15} \left({U}_{m}{bit}_{i}∧{R}_{l}{bit}_{i}\right)\right] - {P}_{l}$ (2)

S represents the similarity. m represents a sequence number of an uploading time point corresponding to a currently calculated positioning coordinate. l represents the serial number of the selected reference point. i represents a decimal bit serial number. Uₘbitᵢ represents an i^{th} bit in the positioning coordinates. Rₗbitᵢ represents an i^{th} bit in the predicted coordinates of the selected reference point. P represents a decimal number of bits of the serial number of the selected reference point.

S being equal to or greater than zero indicates that the predicted coordinates of the selected reference point are similar to the positioning coordinates.

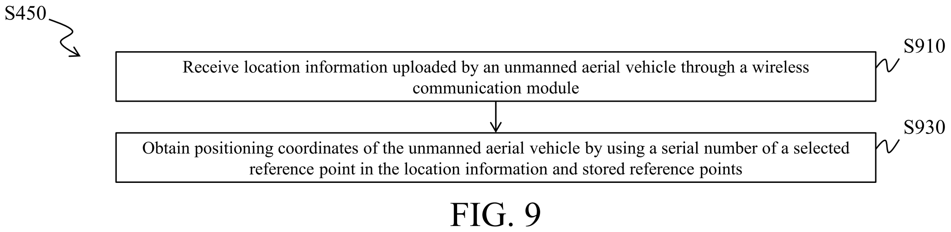

Referring to FIG. 1, FIG. 3, FIG. 4 and FIG. 9, during the process of performing the tracking procedure for UAV 10 (step S450) each time, the processing module 220 will receive the location information uploaded by the UAV 10 through the wireless communication module 240 (step S910), and obtains the positioning coordinates of the UAV 10 by using the serial number of the selected reference point in the location information and the reference points stored in the storage module 230 (step S930).

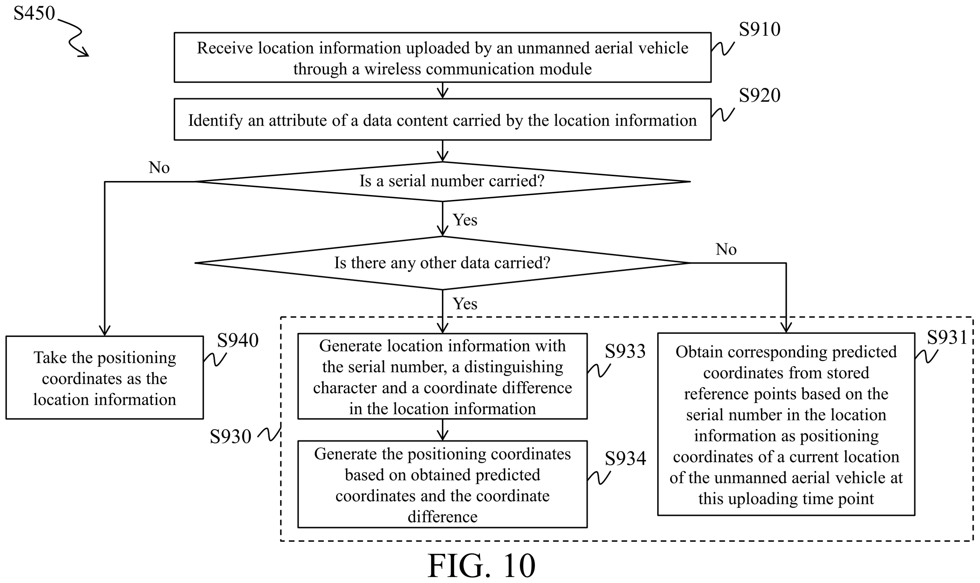

Specifically, referring to FIG. 1, FIG. 3, FIG. 4 and FIG. 10, in some embodiments, after the processing module 220 receives the location information uploaded by the UAV 10 through the wireless communication module 240 (step S910), the processing module 220 first identifies an attribute of a data content carried by the location information (step S920) to conform whether the serial number of the selected reference point exists in the location information and thereby obtains the positioning coordinates of the current location of the UAV 10 at this uploading time point from the location information uploaded by the UAV 10.

In some embodiments, the processing module 220 performs step S930 in response to the location information only having the serial number of the selected reference point. Specifically, in one exemplary example of step S930, when the location information only has the serial number of the selected reference point (only has a data volume of the serial number of the selected reference point but does not have a data volume of the coordinate difference), the processing module 220 will obtain the corresponding predicted coordinates from the stored reference points based on the serial number of the selected reference point in the location information as the positioning coordinates of the current location of the UAV 10 at this uploading time point (step S931).

In other embodiments, the processing module 220 performs step S930 in response to the location information having the character string formed by the serial number of the selected reference point, the distinguishing character and the coordinate difference. Specifically, in another exemplary example of S930, when the data in the location information is the character string formed by the serial number of the selected reference point, the distinguishing character and the coordinate difference, the processing module 220 obtains the corresponding predicted coordinates from the stored reference points based on the serial number of the selected reference point in the location information (step S933), and generates the positioning coordinates based on the obtained predicted coordinates and the coordinate difference (step S934). For example, in step S934, the processing module 220 replaces the bits at corresponding positions in the obtained predicted coordinates with the difference bits in the coordinate difference to generate the positioning coordinates (the predicted coordinates after replacement).

In still other embodiments, when the location information only has the coordinates (i.e., only carries the positioning coordinates but does not carry the serial number of the selected reference point and the coordinate difference), the processing module 220 directly obtains the positioning coordinates of the current location of the UAV 10 at this uploading time point from the location information (step S940).

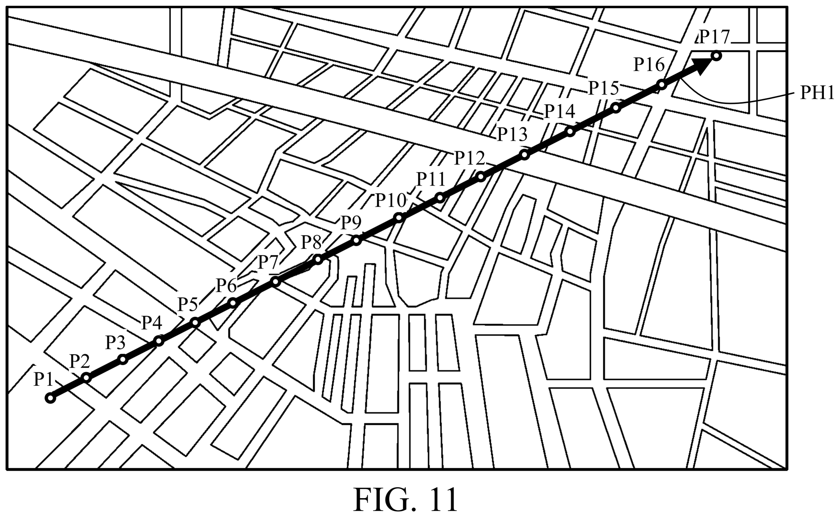

For example, referring to FIG. 1 to FIG. 3 and FIG. 11, it is assumed that the remote monitoring platform 20 knows that the UAV 10 is intended to take off from Kaohsiung Xiaogang Airport (i.e., the start coordinates of the takeoff place) and land at Pingtung South Airport (the end coordinates of the destination), the predetermined flight speed is 160 km/hr and the uploading frequency is once per minute (M=1), i.e., the storage module 230 of the remote monitoring platform 20 has stored the aforementioned information. In this case, the processing module 220 of the remote monitoring platform 20 will predict, based on the aforementioned information, locations to be arrived at all uploading time points at which the location information is expected to be uploaded during this flight of the UAV 10, so as to obtain the predicted coordinates (Rn) of 17 reference points P1-P17 shown in FIG. 11, as shown in Table 1 below. The 17 reference points P1-P17 are located on the expected flight path PH1. Next, the processing module 220 of the remote monitoring platform 20 sorts the predicted coordinates (Rn) of the 17 reference points P1-P17 and gives them serial numbers (n#), then forms the 17 reference points P1-P17 with the serial numbers (n#) of the 17 reference points P1-P17 and the corresponding predicted coordinates (Rn), and sends the 17 reference points P1-P17 to the UAV 10.

**Table 1: 17 reference points P1-P17**

| n# | Rn |
|---|---|
| 1# | 2234.501,N,12020.953,E |
| 2# | 2234.889,N,12021.360,E |
| 3# | 2235.277,N,12021.766,E |
| 4# | 2235.665,N,12022.173,E |
| 5# | 2236.052,N,12022.579,E |
| 6# | 2236.440,N,12022.986,E |
| 7# | 2236.828,N,12023.392,E |
| 8# | 2237.215,N,12023.799,E |
| 9# | 2237.603,N,12024.206,E |
| 10# | 2237.991,N,12024.612,E |
| 11# | 2238.379,N,12025.019,E |
| 12# | 2238.766,N,12025.425,E |
| 13# | 2239.154,N,12025.832,E |
| 14# | 2239.542,N,12026.239,E |
| 15# | 2239.929,N,12026.645,E |
| 16# | 2240.317,N,12027.052,E |
| 17# | 2240. 705,N, 12027.458,E |

After receiving the 17 reference points P1-P17 through the wireless communication module 140, the control module 120 of the UAV 10 stores them in the storage module 130, and controls the flight body 110 to take off and fly toward the predicted coordinates of the reference point P17 (Rn, n#=17#) at the speed of 160 km/hr. After takeoff, the control module 120 performs the information uploading procedure once a minute.

When performing the information uploading procedure, the control module 120 of the UAV 10 calculates which of the 17 reference points P1-P17 saves the most bits based on formula (1). In other words, the control module 120 obtains the current positioning coordinates through the positioning module 150, and compares the positioning coordinates with the predicted coordinates (Rn) of all the reference points P1-P17 in the storage module 130. For the sake of clarity, the following description puts the data content in brackets to distinguish its term.

Taking the 2^{nd} uploading time point (i.e., the UAV 10 flies at a constant speed for 1 minute) as an example, the positioning coordinates obtained by the control module 120 through the positioning module 150 are [2234.889,N,12021.360,E]. The control module 120 reads the predicted coordinates (Rn) of the 17 reference points P1-P17 from the storage module 130, and selects the reference point P2 having the smallest number of difference bits from the positioning coordinates [2234.889,N,12021.360,E] based on formula (1) as the selected reference point (P2). Next, the control module 120 calculates that the similarity between the predicted coordinates [2234.889,N,12021.360,E] of the reference point P2 and the positioning coordinates [2234.889,N,12021.360,E] is greater than zero based on formula (2), which indicates that the predicted coordinates [2234.889,N,12021.360,E] of the reference point P2 and the positioning coordinates [2234.889,N,12021.360,E] have similar data, i.e., data can be saved. Next, the control module 120 compares the predicted coordinates [2234.889,N,12021.360,E] with the positioning coordinates [2234.889,N,12021.360,E] to obtain that their coordinate data are identical, so the control module 120 directly uploads the serial number [2#] of the selected reference point as the location information to the remote monitoring platform 20. In this case, the data volume of the location information uploaded by the UAV 10 is only 1 byte.

In this way, if the UAV 10 does not use the design of the reference points in this flight, in the case of flying at the set speed, the UAV 10 needs to transmit a data volume of 374 (=22*17) to upload the 17 positioning coordinates at 17 uploading time points. After using the design of the reference points, the UAV 10 saves a data volume of 349 (=442-25) bytes for the uploading of 17 location information at 17 uploading time points as compared with the uploading of 17 positioning coordinates originally. This can reduce a data volume of 20.5 bytes for each uploading time point on average, that is, compared with 22-byte coordinate data, the saving rate for uploading packets is up to 93%.

In some embodiments, when the user changes the destination during the flight, the remote monitoring platform 20 re-predicts reference points between the current location to the new destination and provides the reference points to the UAV 10 so as to change the flight direction and update the stored reference points.

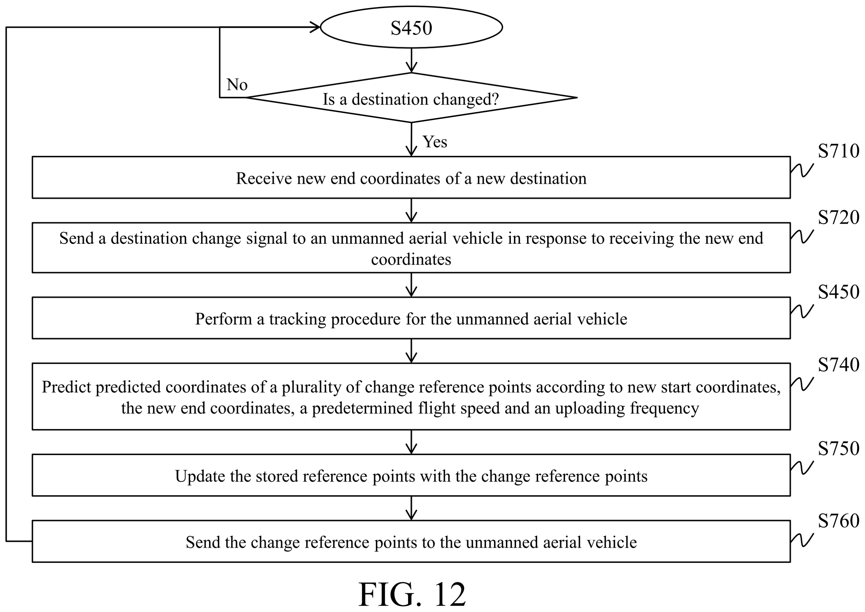

In some embodiments, referring to FIG. 1 to FIG. 5 and FIG. 12, the processing module 220 of the remote monitoring platform 20 receives end coordinates of a new destination (hereinafter referred to as new end coordinates) through the user interface 270 or the user device 30 (step S710), and sends a destination change signal to the UAV 10 through the wireless communication module 240 in response to receiving the new end coordinates (step S720), thereby requiring the UAV 10 to report the current location.

Next, the processing module 220 additionally performs the tracking procedure for the UAV 10 in response to sending the destination change signal (step S450). In other words, after the sending (step S720), the processing module 220 will perform the tracking procedure for the UAV 10 again (step S450) to obtain the positioning coordinates of the current location of the UAV 10 again.

After obtaining the positioning coordinates of the current location of the UAV 10 again (step S450), the processing module 220 takes the obtained positioning coordinates as the start coordinates (hereinafter referred to as new start coordinates), and predicts predicted coordinates of a plurality of change reference points according to the new start coordinates, the new end coordinates, the predetermined flight speed and the uploading frequency (step S740). The processing module 220 sequentially gives serial numbers to the change reference points from the serial number corresponding to the next uploading time point, forms the change reference points with the serial numbers of the change reference points and the predicted coordinates thereof, and updates the reference points stored in the storage module 230 with the change reference points (step S750).

In some embodiments of step S750, the processing module 220 will update the reference points with the serial number corresponding to the next uploading time point and the serial numbers thereafter among all the reference points stored in the storage module 230 with the change reference points. Specifically, the processing module 220 replaces the reference points with the same serial numbers among the reference points stored in the storage module 230 with the change reference points, and deletes the reference points with the serial numbers greater than the largest serial number of the change reference points.

Besides, the processing module 220 also sends the change reference points to the UAV 10 through the wireless communication module 240 (step S760).

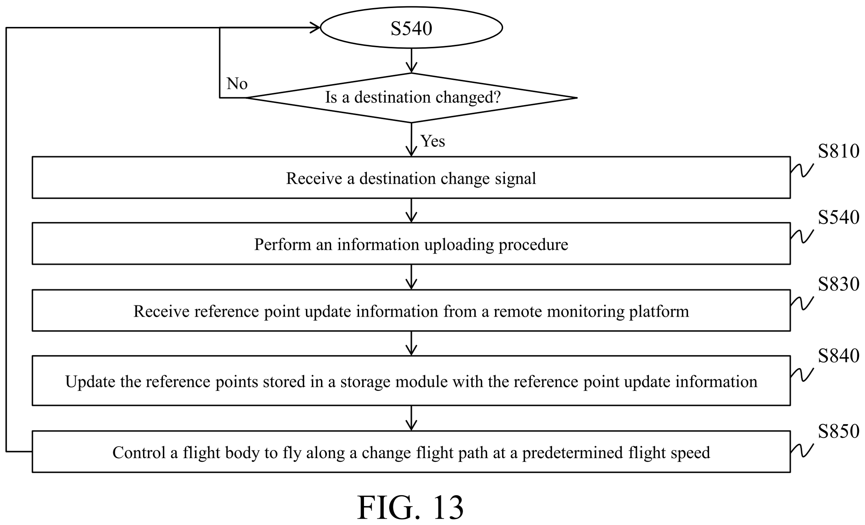

In this case, referring to FIG. 1 to FIG. 5 and FIG. 13, the control module 120 of the UAV 10 may receive the destination change signal from the remote monitoring platform 20 through the wireless communication module 140 (step S810), and additionally perform the information uploading procedure in response to the destination change signal (step S540), thereby reporting the positioning coordinates of the current location to the remote monitoring platform 20.

After additionally performing the information uploading procedure (i.e., after uploading the location information again), the control module 120 of the UAV 10 may receive reference point update information from the remote monitoring platform 20 through the wireless communication module 140 (step S830). The reference point update information includes the change reference points mentioned above, and the serial numbers of the change reference points are given sequentially from the serial number corresponding to the next uploading time point. These change reference points are located on a change flight path.

Next, the control module 120 updates the reference points stored in the storage module 130 with the reference point update information (step S840). In some embodiments of step S840, the control module 120 updates the reference points with the serial number corresponding to the next uploading time point and the serial numbers thereafter among the reference points stored in the storage module 130 with the reference point update information. Specifically, the control module 120 replaces the reference points with the same serial numbers among the reference points stored in the storage module 130 with the change reference points in the reference point update information one-to-one, and deletes the reference points with the serial numbers greater than the largest serial number of the change reference points.

Moreover, the control module 120 controls the flight body 110 to fly along the change flight path at the predetermined flight speed (step S850), i.e., to fly toward the destination. Similar to step S530, in some exemplary examples, the change reference points may include the new destination, and after the change, the control module 120 controls the flight body 110 to fly successively toward the predicted coordinates of the reference points one by one in accordance with the serial numbers of the reference points at the predetermined flight speed. In other exemplary examples, the reference points may not include the destination. When sending the change reference points, the remote monitoring platform 20 will also send the information of the destination (e.g., the new end coordinates or the change flight path) such that the UAV 10 changes the flight direction accordingly. That is, the reference point update information includes the information of the change reference points and the destination.

For example, referring to FIG. 1 to FIG. 3 and FIG. 11, in the above example, if the user changes the destination during the flight, i.e., the UAV 10 is required to fly to the Kaotan barracks area (i.e., the new end coordinates), the remote monitoring platform 20 sends the destination change signal to the UAV 10 in response to the received new end coordinates such that the UAV 10 additionally performs the information uploading procedure in response to the destination change signal.

Specifically, it is assumed that the UAV 10 receives the destination change signal at the 7^{th} minute of the flight. After receiving the destination change signal, the control module 120 of the UAV 10 reads 17 reference points P1-P17 (as shown in Table 1) from the storage module 130, and obtains the positioning coordinates [2237.215,N,12023.799,E] of the current location through the positioning module 150. The control module 120 compares the predicted coordinates (Rn) of the 17 reference points P1-P17 with the positioning coordinates [2237.215,N,12023.799,E], and selects the reference point P8 as the selected reference point. Besides, based on the fact that the selected reference point P8 is identical to the positioning coordinates [2237.215,N,12023.799,E], the control module 120 directly sends the serial number [8#] of the selected reference point P8 (i.e., there is no coordinate difference) back to the remote monitoring platform 20 through the wireless communication module 140.

After the receipt, the remote monitoring platform 20 may read, based on the serial number [8#] of the selected reference point P8, the predicted coordinates (Rn, n#=8#) of the reference point P8 with the serial number [8#] from the 17 reference points P1-P17 stored in the storage module 230, and take the predicted coordinates (Rn, n#=8#) as the new start coordinates.

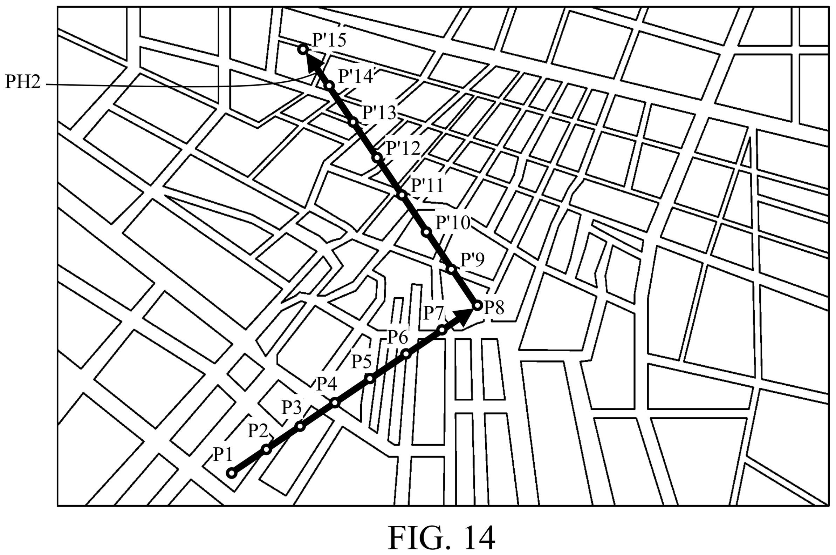

If the user sets the flight speed as V=60 km/hr and the system uploads the coordinate information once per minute (M-1), the remote monitoring platform 20 predicts the predicted coordinates of the reference points (the change reference points P'9-P'15 shown in FIG. 14) in the subsequent flight of the UAV 10, as shown in Table 2 below, and the remote monitoring platform 20 will replace the predicted coordinates of the reference points P9-P15 stored in the storage module 230 with the predicted coordinates of the change reference points P'9-P'15 and delete the reference points P16-P17.

Here, the remote monitoring platform 20 will also send the change reference points P'9-P'15 to the UAV 10 through the wireless communication network, and at the same time, transmit a delete command for deleting the reference points P16-P17 to the UAV 10.

**Table 2: Change reference points P'9-P'15**

| n# | Rn |
|---|---|
| 9# | 2237.731,N,12023.636,E |
| 10# | 2238.249,N,12023.471,E |
| 11# | 2238.767,N,12023.306,E |
| 12# | 2239.284,N,12023.142,E |
| 13# | 2239.802,N,12022.977,E |
| 14# | 2240.320,N,12022.812,E |
| 15# | 2240.837,N,12022.647,E |

After the receipt, the UAV 10 will store the change reference points P'9-P'15 in the storage module 130, i.e., overwrite the old reference points P9-P15 and delete the old reference points P16-P17, as shown in Table 3 below.

**Table 3: 15 reference points P1-P8 and P'9-P'15 after update**

| n# | Rn |
|---|---|
| 1# | 2234.501,N,12020.953,E |
| 2# | 2234.889,N,12021.360,E |
| 3# | 2235.277,N,12021.766,E |
| 4# | 2235.665,N,12022.173,E |
| 5# | 2236.052,N,12022.579,E |
| 6# | 2236.440,N,12022.986,E |
| 7# | 2236.828,N,12023.392,E |
| 8# | 2237.215,N, 12023.799,E |
| 9# | 2237.731,N,12023.636,E |
| 10# | 2238.249,N,12023.471,E |
| 11# | 2238.767,N,12023.306,E |
| 12# | 2239.284,N,12023.142,E |
| 13# | 2239.802,N,12022.977,E |
| 14# | 2240.320,N,12022.812,E |
| 15# | 2240.837,N,12022.647,E |

When the UAV 10 flies along a change flight path PH2 to a new destination at a constant speed, the UAV 10 is intended to transmit the coordinate information to the remote monitoring platform 20 at the 8^{th} minute (i.e., uploading time point) (corresponding to the serial number [9#]). In other words, in step S420 or step S740, the remote monitoring platform 20 predicts that the location of the UAV 10 at the 8^{th} minute is the reference point P9 (or the change reference point P'9).

At the 8th minute, the positioning coordinates of the location of the UAV 10 are [2237.731,N,12023.636,E]. In step S620, the control module 120 of the UAV 10 reads the predicted coordinates of the 15 reference points P1-P8 and P'9-P'15 shown in Table 3 from the storage module 130, selects the reference point P'9 having the smallest number of difference bits from the positioning coordinates [2237.731,N,12023.636,E] as the selected reference point based on formula (1), and then sends the serial number [9#] of the selected reference point P'9 back to the remote monitoring platform 20. Here, since the predicted coordinates of the selected reference point P'9 are identical to the positioning coordinates [2237.731,N,12023.636,E], there is no need to transmit the coordinate difference (i.e., there is no coordinate difference).

In some embodiments, after the remote monitoring platform 20 obtains the positioning coordinates of the UAV 10 (step S930 or step S940), the processing module 220 will monitor the location of the UAV 10 in real time through the updated location information of the UAV 10, and re-predicts the reference points in real time when the current location of the UAV 10 does not reach the corresponding predicted location.

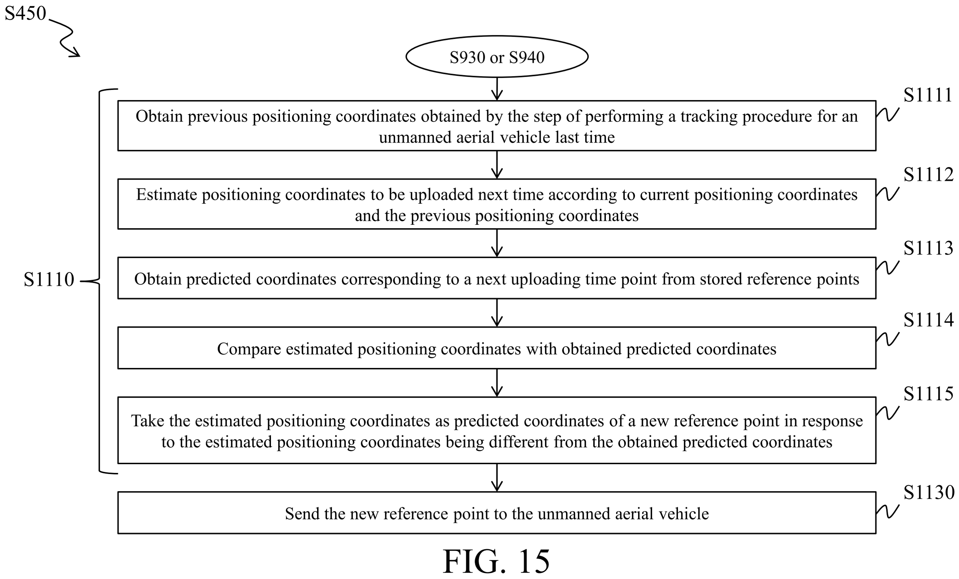

In some embodiments, referring to FIG. 1 to FIG. 4 and FIG. 15, during the process of performing the tracking procedure for the UAV 10 (step S450) each time, after the remote monitoring platform 20 obtains the positioning coordinates of the UAV 10 (step S930 or step S940), the processing module 220 selectively generates a new reference point according to current positioning coordinates and previous positioning coordinates (step S1110), and sends the new reference point to the UAV 10 (step S1130).

In some embodiments of step S1110, after the remote monitoring platform 20 obtains the positioning coordinates of the UAV 10 (hereinafter referred to as the current positioning coordinates) (step S930 or step S940), the processing module 220 obtains the previous positioning coordinates obtained by the step of performing a tracking procedure for the UAV 10 last time (step S1111). Specifically, each time after obtaining the positioning coordinates of the UAV 10 in the tracking procedure, the processing module 220 will store the obtained positioning coordinates in the storage module 230. In any tracking procedure, after obtaining the current positioning coordinates (i.e., the positioning coordinates of the UAV 10 at the current uploading time point), the processing module 220 reads the positioning coordinates of the UAV 10 obtained in the previous tracking procedure from the storage module 130 (i.e., the positioning coordinates of the UAV 10 at the previous uploading time point, hereinafter referred to as the previous positioning coordinates).

Then, the processing module 220 estimates the positioning coordinates to be uploaded next time according to the current positioning coordinates and the previous positioning coordinates (step S1112), and obtains predicted coordinates corresponding to a next uploading time point from the reference points stored in the storage module 230 based on the current uploading time point (step S1113).

Next, the processing module 220 compares estimated positioning coordinates with obtained predicted coordinates (step S1114), and takes the estimated positioning coordinates as predicted coordinates of the new reference point in response to the estimated positioning coordinates being different from the obtained predicted coordinates (step S1115). The processing module 220 gives the new reference point the largest serial number, and forms the new reference point with the serial number of the new reference point and the predicted coordinates thereof, and stores the new reference point in the storage module 230.

In some embodiments, the processing module 220 performs step S1110 through the calculation according to formula (3) below. ${Loc}_{p} \left(T+1\right) = Loc \left(T\right) + {\sum }_{t = 1}^{T} {M}_{t} \left[Loc\left(t\right)-Loc\left(t-1\right)\right]$ (3)

T represents a current uploading time point, Locₚ(T + 1) represents estimated positioning coordinates, Loc(T) represents the current positioning coordinates, and [Loc(t) - Loc(t - 1)] represents a location change between two adjacent positioning coordinates, and Mₜ represents a weight.

When the location change shows that the UAV 10 flies at a constant speed, the weight is zero (Mt = 0), otherwise, the weight is 1 (Mt = 1).

When the control module 120 of the UAV 10 receives the new reference point through the wireless communication module 140, the control module 120 will store the received new reference point in the storage module 130. For example, in an example where there are L places, the storage module 130 originally stores L reference points. The control module 120 will store the received new reference point in the storage module 130 as the (L+1)^{th} reference point.

For example, referring to FIG. 1, it is assumed that the UAV 10 takes off from Kaohsiung Xiaogang Airport and flies for 4 minutes (at the reference point P5 shown in FIG. 11), but has to fly to Pingnan Airport at a speed of V=15 km/hr due to weather factors. Therefore, at the 5^{th} minute of the flight (the predicted location is at the reference point P6 shown in FIG. 11), the control module 120 will compare the positioning coordinates [2236.149,N,12022.682,E] of the current location with data of the 17 reference points P1-P17 stored in the storage module 130 based on formula (1) and finds out the reference point P5 that saves the largest data volume as the selected reference point. Then, the control module 120 generates the location information [5#149,N,682,E] with the serial number [5#] of the selected reference point P5, the distinguishing character [,] and the coordinate difference [149,N,682,E] based on formula (2), and sends the location information [5#149,N,682,E] back to the remote monitoring platform 20.

After receiving the location information [5. 149,N,682,E], the remote monitoring platform 20 knows the positioning coordinates (Loc(T)=2236.149,N,12022.682,E) of the current location of the UAV 10, reads the positioning coordinates of the previous location (Loc(t)) of the UAV 10 from the storage module 230, and then estimates the positioning coordinates [2236.828,N,12023.392,E] of the location of the UAV 10 at the next uploading time point based on formula (3). Since the position changes from t=0 to t=4 all show a constant speed, M₁~M₄ are set to zero, and M₅ is set to 1 (i.e., M₅ = 1).

Then, the remote monitoring platform 20 compares the estimated positioning coordinates [2236.828,N,12023.392,E] with the predicted coordinates of the 17 reference points P1-P17 stored in the storage module 230, and finds that it can save a larger data volume, so an 18^{th} reference point is added with the estimated positioning coordinates [2236.828,N,12023.392,E] and the serial number [18#] and sent to the UAV 10, such that the UAV 10 adds the 18^{th} reference point accordingly. Specifically, in the above example, the UAV 10 has the 17 reference points P1-P17 shown in FIG. 11, and the remote monitoring platform 20 predicts the new reference point through formula (3). If the predicted reference point can save more data than the existing reference points P1-P17 of the UAV 10, the remote monitoring platform 20 will transmit the predicted reference point to the UAV 10 so as to replace and/or add the reference point, for example, transmit new reference points with serial numbers [16#] and [17#] to the UAV 10 to replace the reference points P16-P17 and/or transmit the reference point with the positioning coordinates [2236.828,N,12023.392,E] to the UAV 10 to add the 18^{th} reference point with the content [18#2236.828,N,12023.392,E].

In some embodiments, the control module 120 of the UAV 10 automatically deletes all the reference points stored in the storage module 130 after each flight mission.

It should be noted that although the above steps are described in sequence, this sequence is not limited by the present disclosure. Those skilled in the art should understand that some steps can be performed simultaneously or reversed in sequence under reasonable circumstances.

In some embodiments, the remote monitoring platform 20 may be, for example, a server or a host. In some exemplary examples, the server and the host may be implemented by computers with different operating capabilities.

In some embodiments, the wireless communication network may be, for example, a Long-Term Evolution Category 1 (LET Cat. 1) network, a Cat. M1 (also known as LTE-M) network or Narrowband Internet of Things (NB-IOT, also known as LTE Cat. NB1). That is, the wireless communication modules 140 and 240 may be circuits, chips or network cards supporting radio standards such as Long-Term Evolution Category 1 (LET Cat. 1), Cat. M1 (also known as LTE-M) or Narrowband Internet of Things (NB-IOT, also known as LTE Cat. NB1) corresponding to the wireless communication network.

In some embodiments, the user interface 270 may be a peripheral device of the remote monitoring platform 20, such as a touch screen, a combination of a general display screen and a plurality of physical buttons, or a combination of a touch screen and one or more physical buttons.

In some embodiments, the user device 30 may be a personal computer (PC), a smart phone, a notebook, a Tablet or Pad, or the like.

In some embodiments, the wired network module 260 may be Ethernet, Coaxial Cable, Fiber Optic or the like.

In some embodiments, any one of the control module 120 and the processing module 220 may include one or more processing units. Each processing unit may be, for example, a microprocessor, a microcontroller, a digital signal processor (DSP), a central processing unit (CPU), a programmable logic controller (PLC), an application specific integrated circuit (ASIC), a field programmable gate array (FPGA), a finite-state machine (FSM) or the like. In some embodiments, the processing unit can be implemented by an integrated circuit (IC), a system-on-a-chip (SOC) or any analog and/or digital device that operates signals based on operating instructions.

In some embodiments, each storage module 130, 230 may be implemented by one or more storage components. Each storage component may be, for example, a memory, a memory card or a buffer.

In some embodiments, the positioning module 150 may be implemented by a global positioning system (GPS) or the like.

In some embodiments, the method for uploading information of a UAV according to any embodiment may be implemented by a computer program product. In other words, the computer program product stores at least one program, such that the control module 120 of the UAV 10 can complete the method for uploading information of a UAV according to any embodiment after loading the program and executing it. In some embodiments, the computer program product may a non-transient readable recording medium, and the program is stored in the non-transient readable recording medium for the UAV 10 to load. In other embodiments, the program itself may be a computer program product, which is transmitted to the UAV 10 by wired or wireless means.

In some embodiments, the monitoring method for a UAV according to any embodiment may be implemented by a computer program product. In other words, the computer program product stores at least one program, such that the computer (i.e., the remote monitoring platform 20) can complete the monitoring method for a UAV according to any embodiment after loading the program and executing it. In some embodiments, the computer program product may a non-transient readable recording medium, and the program is stored in the non-transient readable recording medium for the UAV 10 to load. In other embodiments, the program itself may be a computer program product, which is transmitted to the computer by wired or wireless means.

Based on the above, the UAV 10, the remote monitoring platform 20 thereof, the method for uploading information thereof and the monitoring method therefor according to any embodiment greatly reduce a data length in a transmission packet to effectively reduce a transmitted data volume, thereby reducing data transmission time and power consumption of devices.

## Claims

1. A method for uploading information of an unmanned aerial vehicle (10), comprising:
generating a piece of location information according to a plurality of reference points (P1-P17) (S542), wherein each of the reference points (P1-P17) has a serial number and predicted coordinates, and the step of generating the location information according to the plurality of reference points (P1-P17) (S542) comprises:
selecting a selected reference point with a predicted coordinate similar or identical to a positioning coordinate from the plurality of reference point (P1-P17) (S542a); and
generating a piece of location information with a serial number of the selected reference point in response to the selected reference point (S542b); and
uploading the location information to a remote monitoring platform (20) (S544).

2. The method for uploading information of an unmanned aerial vehicle (10) according to claim 1, wherein the step of selecting the selected reference point (S542a) comprises:
obtaining the positioning coordinate of a current location of the unmanned aerial vehicle (10) (S610); and
selecting reference points with a highest data similarity between the predicted coordinates and the positioning coordinates from the plurality of reference points (P1-P17) as the selected reference point by comparing the positioning coordinates with the predicted coordinates of the plurality of reference points (P1-P17) (S620), wherein the highest data similarity means that when a plurality of bits of the predicted coordinates in the plurality of reference points (P1-P17) are sequentially compared with a plurality of bits of the positioning coordinates from left to right, a number of remaining bits is the smallest from a first comparison to different bits; and
wherein the step of generating the location information (S542b) comprises: generating the location information based on the serial number of the selected reference point and a coordinate difference between the predicted coordinates of the selected reference point and the positioning coordinates (S630).

3. The method for uploading information of an unmanned aerial vehicle (10) according to claim 2, wherein the positioning coordinates are identical to the predicted coordinates of the selected reference point, and the location information only has a data volume of the serial number of the selected reference point but does not have a data volume of the coordinate difference and the positioning coordinates.

4. The method for uploading information of an unmanned aerial vehicle (10) according to claim 2, wherein the positioning coordinates are different from the predicted coordinates of the selected reference point, and the coordinate difference comprises a distinguishing character and a plurality of difference bits between the predicted coordinates and the positioning coordinates.

5. The method for uploading information of an unmanned aerial vehicle (10) according to any of claims 2-4, wherein the step of selecting the selected reference point (S542a) comprises:
calculating a difference data volume between the predicted coordinates of each of the reference points (P1-P17) and the positioning coordinates according to the positioning coordinates and the predicted coordinates of the plurality of reference points (P1-P17) (S621); and
selecting a corresponding reference point with a largest difference data volume from the plurality of reference points (P1-P17) as the selected reference point (S622).

6. The method for uploading information of an unmanned aerial vehicle (10) according to any of claims 1-5, wherein the step of generating the location information (S542b) comprises:
calculating a similarity between the predicted coordinates of the selected reference point and the positioning coordinates (S631); and
calculating a coordinate difference in response to the similarity indicating that the predicted coordinates are similar to the positioning coordinates (S633), and forming the location information with a serial number of the selected reference point, a distinguishing character and the coordinate difference (S634).

7. The method for uploading information of an unmanned aerial vehicle according to any of claims 1-6, further comprising:
receiving a destination change signal (S810);
performing the steps of generating the location information (S542) and uploading the location information (S544) again in response to the destination change signal;
receiving a piece of reference point (P1-P17) update information from the remote monitoring platform (20) (S830); and
updating a plurality of stored reference points (P1-P17) with the reference point update information (S840).

8. A monitoring method for an unmanned aerial vehicle (10), comprising:
generating a plurality of reference points (P1-P17) according to an expected flight path (PH1) of an unmanned aerial vehicle (10) (S420), wherein each of the reference points (P1-P17) has a serial number and predicted coordinates;
storing a plurality of generated reference points (P1-P17) (S430);
sending the plurality of reference points (P1-P17) to the unmanned aerial vehicle (10) (S440);
receiving a piece of location information uploaded by the unmanned aerial vehicle (10) (S910), wherein the location information comprises a serial number; and
obtaining positioning coordinates of the unmanned aerial vehicle (10) by using the serial number in the location information and a plurality of stored reference points (P1-P17) (S930).

9. The monitoring method for an unmanned aerial vehicle (10) according to claim 8, wherein the step of obtaining the positioning coordinates (S930) comprises:
obtaining the corresponding predicted coordinates from the plurality of stored reference points (P1-P17) based on the serial number in the location information as the positioning coordinates (S931).

10. The monitoring method for an unmanned aerial vehicle (10) according to any of claims 8 and 9, wherein the location information further comprises a coordinate difference, and the step of obtaining the positioning coordinates (S930) comprises:
obtaining the corresponding predicted coordinates from the plurality of stored reference points (P1-P17) based on the serial number in the location information (S933); and
generating the positioning coordinates based on the predicted coordinates and the coordinate difference (S934).

11. The monitoring method for an unmanned aerial vehicle (10) according to any of claims 8-10, further comprises:
selectively generating a new reference point according to current positioning coordinates and previous positioning coordinates (S1110); and
sending the new reference point to the unmanned aerial vehicle (10) (S1130).

12. The monitoring method for an unmanned aerial vehicle (10) according to claim 11, wherein the step of selectively generating the new reference point (S1110) comprises:
obtaining the previous positioning coordinates of the unmanned aerial vehicle (10) (S1111);
estimating positioning coordinates to be uploaded next time according to the current positioning coordinates and the previous positioning coordinates (S1112);
obtaining predicted coordinates corresponding to a next uploading time point from the plurality of stored reference points (S1113);
comparing estimated positioning coordinates with obtained predicted coordinates (S1114); and
taking the estimated positioning coordinates as predicted coordinates of the new reference point in response to the estimated positioning coordinates being different from the obtained predicted coordinates (S1115).

13. The monitoring method for an unmanned aerial vehicle (10) according to any of claims 8-12, further comprises:
receiving new end coordinates of a new destination (S710);
sending a destination change signal to the unmanned aerial vehicle (10) in response to receiving the new end coordinates (S720);
performing the step of receiving the location information (S910) and the step of obtaining the positioning coordinates (S930) again in response to sending the destination change signal;
predicting a plurality of change reference points according to new start coordinates, the new end coordinates, a predetermined flight speed and an uploading frequency (S740), wherein each of the change reference points has a serial number and predicted coordinates, the predicted coordinates of the plurality of change reference points are located on a change flight path (PH2), two ends of the change flight path (PH2) are respectively the new start coordinates and the new end coordinates, and the new start coordinates are the positioning coordinates obtained again;
updating the plurality of stored reference points (P1-P17) with the plurality of change reference points (S750); and
sending the plurality of change reference points to the unmanned aerial vehicle (10) (S760).

14. An unmanned aerial vehicle (10), comprising:
a flight body (110);
a storage module (130), storing a plurality of reference points (P1-P17), each of the reference points (P1-P17) having a serial number and predicted coordinates;
a positioning module (150), located on the flight body (110), and configured to perform positioning to generate positioning coordinates;
a wireless communication module (140), located on the flight body (110); and
a control module (120), connected to the flight body (110), the storage module (130), the positioning module (150) and the wireless communication module (140), and configured to perform:
generating a piece of location information according to the plurality of reference points (P1-P17) and the positioning coordinates, comprising:
selecting a selected reference point with the predicted coordinates similar or identical to the positioning coordinates from the plurality of reference points (P1-P17); and
generating location information with a serial number of the selected reference point in response to the selected reference point; and
uploading the location information to a remote monitoring platform (20).

15. A remote monitoring platform (20), comprising:
a storage module (230), storing an expected flight path (PH1) of an unmanned aerial vehicle (10);
a wireless communication module (240); and
a processing module (220), connected to the storage module (230) and the wireless communication module (240), and configured to perform:
generating a plurality of reference points (P1-P17) according to the expected flight path (PH1), wherein each of the reference points (P1-P17) has a serial number and predicted coordinates;
storing the plurality of reference points in the storage module (230);
sending the plurality of reference points (P1-P17) to the unmanned aerial vehicle (10) through the wireless communication module (240); and
receiving a piece of location information uploaded by the unmanned aerial vehicle (10) through the wireless communication module (240), wherein the location information comprises a serial number of a selected reference point; and
obtaining positioning coordinates of the unmanned aerial vehicle (10) by using the serial number of the selected reference point and a plurality of stored reference points (P1-P17).

## Amended claims

### Amended claims in accordance with Rule 137(2) EPC.

1. A method for uploading information of an unmanned aerial vehicle (10), comprising:
generating a piece of location information according to a plurality of reference points (P1-P17) (S542), wherein each of the reference points (P1-P17) has a serial number and predicted coordinates, and the step of generating the location information according to the plurality of reference points (P1-P17) (S542) comprises:
selecting a selected reference point with a predicted coordinate similar or identical to a positioning coordinate from the plurality of reference point (P1-P17) (S542a); and
generating a piece of location information with a serial number of the selected reference point in response to the selected reference point (S542b); and
uploading the location information to a remote monitoring platform (20) (S544);
wherein the step of selecting the selected reference point (S542a) comprises:
obtaining the positioning coordinate of a current location of the unmanned aerial vehicle (10) (S610); and
selecting reference points with a highest data similarity between the predicted coordinates of the selected reference point and the positioning coordinates from the plurality of reference points (P1-P17) as the selected reference point by comparing the positioning coordinates with the predicted coordinates of the plurality of reference points (P1-P17) (S620), wherein the highest data similarity means that when a plurality of bits of the predicted coordinates in each of the plurality of reference points (P1-P17) are sequentially compared with a plurality of bits of the positioning coordinates from left to right, a number of remaining bits is the smallest from a first comparison to different bits; and
wherein the step of generating the location information (S542b) comprises:
calculating a similarity between the predicted coordinates of the selected reference point and the positioning coordinates (S631); and
calculating a coordinate difference in response to the similarity indicating that the predicted coordinates of the selected reference point are similar to the positioning coordinates (S633), and forming the location information with a serial number of the selected reference point, a distinguishing character and the coordinate difference (S634), wherein the coordinate difference is one or more bits of the positioning coordinates different from corresponding bits of the predicted coordinates of the selected reference point.

2. The method for uploading information of an unmanned aerial vehicle according to claim 1, further comprising:
receiving a destination change signal (S810);
performing the steps of generating the location information (S542) and uploading the location information (S544) again in response to the destination change signal;
receiving a piece of reference point (P1-P17) update information from the remote monitoring platform (20) (S830); and
updating a plurality of stored reference points (P1-P17) with the reference point update information (S840).

3. A monitoring method for an unmanned aerial vehicle (10), comprising:
generating a plurality of reference points (P1-P17) according to an expected flight path (PH1) of an unmanned aerial vehicle (10) (S420), wherein each of the reference points (P1-P17) has a serial number and predicted coordinates;
storing a plurality of generated reference points (P1-P17) (S430);
sending the plurality of reference points (P1-P17) to the unmanned aerial vehicle (10) (S440);
receiving a piece of location information uploaded by the unmanned aerial vehicle (10) (S910), wherein the location information is formed with a serial number of a selected reference point, a distinguishing character and a coordinate difference, and the coordinate difference is one or more bits of positioning coordinates of the unmanned aerial vehicle (10) different from corresponding bits of predicted coordinates of the selected reference point; and
obtaining positioning coordinates of the unmanned aerial vehicle (10) by using the serial number in the location information and a plurality of stored reference points (P1-P17) (S930).

4. The monitoring method for an unmanned aerial vehicle (10) according to claim 3, wherein the step of obtaining the positioning coordinates (S930) comprises:
obtaining the corresponding predicted coordinates from the plurality of stored reference points (P1-P17) based on the serial number in the location information (S933); and
generating the positioning coordinates based on the predicted coordinates and the coordinate difference (S934).

5. The monitoring method for an unmanned aerial vehicle (10) according to any of claims 3-4, further comprises:
selectively generating a new reference point according to current positioning coordinates and previous positioning coordinates (S1110); and
sending the new reference point to the unmanned aerial vehicle (10) (S1130).

6. The monitoring method for an unmanned aerial vehicle (10) according to claim 5, wherein the step of selectively generating the new reference point (S1110) comprises:
obtaining the previous positioning coordinates of the unmanned aerial vehicle (10) (S1111);
estimating positioning coordinates to be uploaded next time according to the current positioning coordinates and the previous positioning coordinates (S1112);
obtaining predicted coordinates corresponding to a next uploading time point from the plurality of stored reference points (S1113);
comparing estimated positioning coordinates with obtained predicted coordinates (S1114); and
taking the estimated positioning coordinates as predicted coordinates of the new reference point in response to the estimated positioning coordinates being different from the obtained predicted coordinates (S1115).

7. The monitoring method for an unmanned aerial vehicle (10) according to any of claims 3-6, further comprises:
receiving new end coordinates of a new destination (S710);
sending a destination change signal to the unmanned aerial vehicle (10) in response to receiving the new end coordinates (S720);
performing the step of receiving the location information (S910) and the step of obtaining the positioning coordinates (S930) again in response to sending the destination change signal;
predicting a plurality of change reference points according to new start coordinates, the new end coordinates, a predetermined flight speed and an uploading frequency (S740), wherein each of the change reference points has a serial number and predicted coordinates, the predicted coordinates of the plurality of change reference points are located on a change flight path (PH2), two ends of the change flight path (PH2) are respectively the new start coordinates and the new end coordinates, and the new start coordinates are the positioning coordinates obtained again;
updating the plurality of stored reference points (P1-P17) with the plurality of change reference points (S750); and
sending the plurality of change reference points to the unmanned aerial vehicle (10) (S760).

8. An unmanned aerial vehicle (10), comprising:
a flight body (110);
a storage module (130), storing a plurality of reference points (P1-P17), each of the reference points (P1-P17) having a serial number and predicted coordinates;
a positioning module (150), located on the flight body (110), and configured to perform positioning to generate positioning coordinates;
a wireless communication module (140), located on the flight body (110); and
a control module (120), connected to the flight body (110), the storage module (130), the positioning module (150) and the wireless communication module (140), and configured to perform:
generating a piece of location information according to the plurality of reference points (P1-P17) and the positioning coordinates, comprising:
selecting a selected reference point with the predicted coordinates similar or identical to the positioning coordinates from the plurality of reference points (P1-P17); and
generating location information with a serial number of the selected reference point in response to the selected reference point; and
uploading the location information to a remote monitoring platform (20);
wherein the step of selecting the selected reference point (S542a) comprises:
obtaining the positioning coordinate of a current location of the unmanned aerial vehicle (10) (S610); and
selecting reference points with a highest data similarity between the predicted coordinates of the selected reference point and the positioning coordinates from the plurality of reference points (P1-P17) as the selected reference point by comparing the positioning coordinates with the predicted coordinates of the plurality of reference points (P1-P17) (S620), wherein the highest data similarity means that when a plurality of bits of the predicted coordinates in each of the plurality of reference points (P1-P17) are sequentially compared with a plurality of bits of the positioning coordinates from left to right, a number of remaining bits is the smallest from a first comparison to different bits; and
wherein the step of generating the location information (S542b) comprises:
calculating a similarity between the predicted coordinates of the selected reference point and the positioning coordinates (S631); and
calculating a coordinate difference in response to the similarity indicating that the predicted coordinates of the selected reference point are similar to the positioning coordinates (S633), and forming the location information with a serial number of the selected reference point, a distinguishing character and the coordinate difference (S634), wherein the coordinate difference is one or more bits of the positioning coordinates different from corresponding bits of the predicted coordinates of the selected reference point.

9. A remote monitoring platform (20), comprising:
a storage module (230), storing an expected flight path (PH1) of an unmanned aerial vehicle (10);
a wireless communication module (240); and
a processing module (220), connected to the storage module (230) and the wireless communication module (240), and configured to perform:
generating a plurality of reference points (P1-P17) according to the expected flight path (PH1), wherein each of the reference points (P1-P17) has a serial number and predicted coordinates;
storing the plurality of reference points in the storage module (230);
sending the plurality of reference points (P1-P17) to the unmanned aerial vehicle (10) through the wireless communication module (240); and
receiving a piece of location information uploaded by the unmanned aerial vehicle (10) through the wireless communication module (240), wherein the location information is formed with a serial number of a selected reference point, a distinguishing character and a coordinate difference, and the coordinate difference is one or more bits of positioning coordinates of the unmanned aerial vehicle (10) different from corresponding bits of predicted coordinates of the selected reference point; and
obtaining positioning coordinates of the unmanned aerial vehicle (10) by using the serial number of the selected reference point and a plurality of stored reference points (P1-P17).
